# EUROPEAN PATENT SPECIFICATION

(11) **EP 2 627 439 B1**
(45) Date of publication and mention of the grant of the patent: **14.12.2016**
(21) Application number: 12766791.3
(22) Date of filing: 14.09.2012
(51) Int. Cl.: B01F 17/30

(54) **METHOD FOR SOLUBILIZING CARBOXYLIC ACID-CONTAINING COMPOUND IN HYDROCARBON SOLVENT**
VERFAHREN ZUR SOLUBILISIERUNG EINER CARBOXYLSÄUREHALTIGEN VERBINDUNG IN EINEM KOHLENWASSERSTOFFLÖSUNGSMITTEL
PROCÉDÉ DE SOLUBILISATION D'UN COMPOSÉ CONTENANT DE L'ACIDE CARBOXYLIQUE DANS UN SOLVANT HYDROCARBONÉ

(30) Priority: 29.09.2011 US 201161540552 P
(43) Date of publication of application: 21.08.2013
(73) Proprietor: Dow Global Technologies LLC, Midland, MI 48674 (US)
(72) Inventor: QIU, XiaoHua Sam, Midland, MI 48642 (US); JONS, Steven D., Eden Prairie, MN 55346 (US); KOOB, Joseph D., Midland, MI 48674 (US); PEERY, Martin H., Bloomington, MN 55438 (US); ROSENBERG, Steven, Shorewood, MN 55331 (US); ROY, Abhishek, Edina, MN 55439 (US); TOMLINSON, Ian A., Midland, MI 48642 (US)
(74) Representative: Hoggins, Mark Andrew
(86) International application number: PCT/US2012/055265
(87) International publication number: WO 2013/048763

(56) References cited:
- EP-A1- 0 302 149
- WO-A1-2012/102944
- DE-A1- 2 530 562

## Description

### FIELD OF THE INVENTION:

The present invention is directed toward methods for increasing the solubility of carboxylic acid-containing compounds within a variety of hydrocarbon solvents.

### BACKGROUND:

Compounds including carboxylic acid functional groups generally have poor solubility in hydrocarbon solvents. For example, hydrocarbon compounds including an aliphatic or arene moiety substituted with at least one acyl halide and at least one carboxylic acid functional group generally have solubilities below 0.02 weight percent in paraffinic solvents. Techniques for increasing the solubility of such compounds are desired. The resulting solutions would be useful in a variety of applications including the preparation of polyamides.

EP 0302149 A1 and DE2530562 A1 teach that alkyl phosphates can increase solubility of certain organic compounds in lubricant oils.

### BRIEF SUMMARY OF THE INVENTION:

The present invention includes a method for increasing the solubility of a hydrocarbon compound comprising an aliphatic or arene moiety substituted with at least one acyl halide and at least one carboxylic acid functional group within a hydrocarbon solvent, wherein the method comprises the step of preparing a solution comprising:
i) at least 80 v/v% of the hydrocarbon solvent,
ii) the hydrocarbon compound, and
iii) from 0.01 to 10 weight percent of a tri-hydrocarbyl phosphate compound represented by: 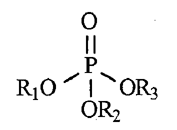
   wherein R₁, R₂ and R₃ are independently selected from hydrogen and hydrocarbyl groups comprising from 1 to 10 carbon atoms, with the proviso that no more than one of R₁, R₂ and R₃ are hydrogen;
   wherein the concentration of the hydrocarbon compound is greater than its solubility limit within the solvent but less than its solubility limit in the solution;
   provided that when said hydrocarbon compound is a C₂-C₂₀ aliphatic monomer comprising a single acyl halide functional group or a monomer comprising an aromatic moiety substituted with a single carboxylic acid functional group or salt thereof and a single acyl halide functional group, and R₁, R₂ and R₃ each represent a C₁-C₈ aliphatic group, said solution does not comprise from 0.01 to 2 weight percent of said tri-hydrocarbyl phosphate compound.

### DETAILED DESCRIPTION OF THE INVENTION:

The hydrocarbon compounds of the present invention include an aliphatic or arene moiety including at least one (and preferably only one) carboxylic acid functional group and at least one acyl halide functional group and are hereinafter referred to as "carboxylic acid-containing compound," "hydrocarbon compound" or simply "compound." In a preferred set of embodiments, the compound has a molecular weight less than 700, 600, 500, 400 or 300 Daltons. In another set of embodiments, the compound comprises equal to or less than 30, 20, 15 or 12 carbon atoms, and preferably includes more than 3 carbon atoms. In yet another set of embodiments, the compound comprises from 4 to 12 carbon atoms. Non-limiting examples of compounds based upon aliphatic moieties include: 4-chloro-4-oxobutanoic acid, 5-chloro-5-oxopentanoic acid, 6-chloro-6-oxohexanoic acid, 7-chloro-7-oxoheptanoic acid, 8-chloro-8-oxooctanoic acid, 9-chloro-9-oxononanoic acid, 10-chloro-10-oxodecanoic acid, 11-chloro-11-oxoundecanoic acid, 12-chloro-12-oxododecanoic acid; 3-(chlorocarbonyl)cyclobutanecarboxylic acid, 3-(chlorocarbonyl)cyclopentane carboxylic acid, 2,4-bis(chlorocarbonyl)cyclopentanecarboxylic acid, 3,5-bis(chlorocarbonyl) cyclohexanecarboxylic acid and 4-(chlorocarbonyl)cyclohexanecarboxylic acid. Non-limiting examples of compounds based upon arene moieties include: 4-(chlorocarbonyl) benzoic acid, 3,5-bis(chlorocarbonyl)benzoic acid, 7-(chlorocarbonyl)-2-naphthoic acid and 5,7-bis(chlorocarbonyl)-2-naphthoic acid. Additional examples of applicable compounds include branched analogs of the preceding compounds along with analogs including additional acyl halide functional groups or carboxylic acid functional groups.

The selection of hydrocarbon solvent is not particularly limited and combinations of multiple solvents may be used. The solvent is preferably a liquid at 20°C (101 kPa). The solvent preferably has a water solubility of less than 800 ppm (and more preferably less than 500, 400, 300, or 200, or in some embodiments, less than 150 ppm). As used herein, the term "water solubility" refers to the concentration of water that is soluble in a chosen hydrocarbon solvent measured at 20°C (101 kPa) as measured by ASTM D4928-11. Non-limiting examples of applicable hydrocarbon solvents include: paraffins (e.g. hexane, cyclohexane, heptane, octane, dodecane), isoparaffins (e.g. ISOPAR™ L), aromatics (e.g. benzene, 1,3,5-trimethylbenzene, toluene,) and halogenated hydrocarbons (e.g. FREON™ series, chlorobenzene, di- and trichlorobenzene).

Tri-hydrocarbyl phosphate compounds applicable in the present invention include those represented by Formula (I):

### Formula (I):

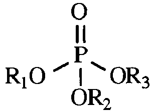

wherein "P" is phosphorous, "O" is oxygen and R₁, R₂ and R₃ are independently selected from hydrogen and hydrocarbyl groups comprising from 1 to 10 carbon atoms, with the proviso that no more than one of R₁, R₂ and R₃ are hydrogen. R₁, R₂ and R₃ are preferably independently selected from aliphatic and arene groups. Applicable aliphatic groups include both branched an unbranched species, e.g. methyl, ethyl, propyl, isopropyl, butyl, isobutyl, pentyl, 2-pentyl, 3-pentyl, cyclopentyl, hexyl, 2-ethylhexyl, cyclohexyl, etc.; however, alkyl groups having from 3 to 10 carbon atoms are preferred. Applicable arene groups include phenyl and napthyl groups. Specific examples tri-hydrocarbyl phosphate compounds include: tripropyl phosphate, tributyl phosphate, tripentyl phosphate, trihexyl phosphate, triphenyl phosphate, propyl biphenyl phosphate, dibutyl phenyl phosphate, butyl diethyl phosphate, dibutyl hydrogen phosphate, butyl heptyl hydrogen phosphate and butyl heptyl hexyl phosphate. Such compounds are known from WO 2012/102944.

The solution may further include additional constituents including a polyfunctional acyl halide compound including an aliphatic or arene moiety substituted with a plurality of acyl halide functional groups. Non-limiting examples include: C₄ through C₁₂ alkanes (e.g. succinyl, glutaroyl, adipoyl, heptanedioyl, octanedioyl, nonanedioyl, decanedioyl, undecanedioyl and dodecanedioyl di and tri chloride), cycloalkanes (e.g. cyclopropane tri carboxylic acid chloride, cyclobutane tetra carboxylic acid chloride, cyclopentane tri carboxylic acid chloride, cyclopentane tetra carboxylic acid chloride, cyclohexane tri carboxylic acid chloride, tetrahydrofuran tetra carboxylic acid chloride, cyclopentane dicarboxylic acid chloride, cyclobutane dicarboxylic acid chloride, cyclohexane di carboxylic acid chloride, tetrahydrofuran dicarboxylic acid chloride, cyclohexane dichloride, cyclohexane-1,3,5-tricarbonyl trichloride, and decahydronaphthalene-2,6-dicarbonyl dichloride. Non-limiting examples of reactants based upon arene moieties include: terephthaloyl dichloride, isophthalic acid chloride, benzene-1,3,5-tricarbonyl trichloride and naphthalene-2,6-dicarbonyl dichloride. Additional examples of reactants include branched analogs of the preceding compounds along analogs including additional acyl halide functional groups.

The aforementioned constituents are combined to form a solution comprising at least 80 v/v% hydrocarbon solvent, and in some embodiments at least 90 v/v%, 92 v/v% or 95 v/v% hydrocarbon solvent. In one set of embodiments, the hydrocarbon compound is provided a concentration of at least 0.01 wt%, 0.02 wt%, 0.03 wt%, 0.04 wt%, 0.05 wt%, 0.06 wt% or 0.1wt %. In another set of embodiments, the solution comprises from 0.01 to 5 wt %, 0.02 to 2 wt %, 0.04 to 2 wt % or 0.05 to 2 wt% of the hydrocarbon compoundThe solution comprises from 0.01 to 10 wt% of the tri-hydrocarbyl phosphate compound. The aforementioned constituents may be combined and mixed within a reaction vessel at room temperature.

In many embodiments, the hydrocarbon compound has a solubility limit of less than 1 wt. % in the hydrocarbon solvent, and in some embodiments less than 0.1 wt.%, 0.05 wt%, 0.02 wt% and still others less than even 0.01 wt%. While not wishing to be bound by theory, it is believed that the subject class of tri-hydrocarbyl phosphates increases the solubility of the subject hydrocarbon compounds within the hydrocarbon solvent (e.g. increase of at least 10%). Hydrocarbon-based solutions including relatively higher concentrations of the subject hydrocarbon compounds are useful in a variety of applications including coating operations to prepare polyamides.

Many embodiments of the invention have been described and in some instances certain embodiments, selections, ranges, constituents, or other features have been characterized as being "preferred." Characterizations of "preferred" features should in no way be interpreted as deeming such features as being required, essential or critical to the invention. For purposes of this description, the terms "acyl halide" and "acid halide" have the same meaning. While much of the description has focused upon acyl chlorides, non-chloride halides are also included. The term "solubility limit" refers to the point at which no additional amount of a constituent, (e.g. water, reaction product, hydrocarbon reactant) is miscible or dissolvable with the hydrocarbon solvent or solution, as measured at 20°C and 101 kPa. Unless otherwise stated, all solubility related parameters are determined at 20°C and 101 kPa.

### EXAMPLES:

Preparation of mono-hydrolyzed polyfunctional acid chlorides:
High purity mono-hydrolyzed polyfunctional acid chlorides can be obtained via a variety of routes, including for example, preparing a starter solution by combining a polyfunctional acid chloride (many of which are commercially available including for example, trimesoyl chloride (TMC) and isophthaloyl chloride (IPC)), trialkylphosphate (e.g. tributylphosphate(TBP) and triethylphosphate, (TEP)), and trace levels of water in 100 mL of non-polar solvent in quantities described as separate entries in the table below. The starter solution is allowed to stir for 14-20 hours after which time an additional 1 g of the polyfunctional acid chloride and 0.0076 mL of water is added. The solution is allowed to stir for 1-2 hours and an additional 0.0076 mL of water is added. This is repeated until a total of 4 additions of 0.0076 mL of water are added to the starter solution. During the reaction, the mono-hydrolyzed polyfunctionalized acid chloride product precipitates out of the solution. The white precipitate can be collected using filter paper and washed repeatedly with fresh solvent yielding high purity mono-hydrolyzed polyfunctional acid chloride.

**Table 1:**

| | Acid Chloride | | Additive | | | | Product Selectivity (%) |
|---|---|---|---|---|---|---|---|
| Example No. | type | wt% | type | wt% | Solvent | Water (ppm) | |
| 1-1 | TMC | 1.2 | TBP | 0.56 | Isopar L | 100 | 99 |
| 1-2 | IPC | 1.0 | TBP | 0.48 | Isopar L | 20 | 100 |
| 1-3 | TMC | 2.0 | TEP | 0.65 | Isopar L | 20 | 100 |
| 1-4 | TMC | 3.9 | TEHP | 1.30 | Isopar L | 20 | 94.8 |
| 1-5 | TMC | 2.0 | TBP | 0.65 | 90/10 Isopar L/toluene | 20 | 100 |

Solubility measurement of acid chlorides containing one carboxylic acid moiety in hydrocarbon solvents with and without solubility enhancing additives:
Saturated solutions of sample acid chlorides containing carboxylic acid moieties were prepared in hydrocarbon solvents with and without the presence of trialkylphosphate additives by adding more sample than will dissolve in the solvent and decanting the saturated solvent from the undissolved precipitate. The saturated solutions were evaluated by proton NMR. Deuterated Isopar L is not commercially available, thus all spectra were acquired in the unlocked condition using regular Isopar L. Because of the very high proton concentration in running a non-deuterated solvent, 60° pulse and minimum receiver gain were used to avoid receiver overflow. A relaxation delay of 8 seconds was used for complete signal recovery between scans. The spectral width was set to 20 ppm and the center of the spectrum was set to 5 ppm. Depending on the concentrations of the species of interest, 64-256 scans were used for signal averaging.

An example of the spectra analysis and calculations used to determine the solubility is provide below for an Isopar solution of mono-hydrolyzed trimesoyl chloride (mhTMC) with and without TBP. The area of the Isopar L peaks between 0.75 and 2.0 ppm were measure and divided by 26 (which represents the average H's present in Isopar L, assuming a molecular formula of C₁₂H₂₆) and multiplied by 170.33, the formula weight of C₁₂H₂₆. The peak area of the aromatic acid chlorides containing carboxylates are between 8.9 - 9.2 ppm and are well resolved from the Isopar solvent. The integration of one of the assigned peaks (for example, the triplet of mono-hydrolyzed TMC at 9.0 ppm represents a single proton) was used to determine the relative weight of the sample in the Isopar L solvent. The integration is divided by the number of protons it represents and multiplied by the formula weight of the compound it represents (for example, the triplet of mono-hydrolyzed TMC at 9.0 ppm would be divided by 1 and multiplied by 247.03 g/mol). The wt% of mono-hydrolyzed TMC in the saturated solution is determined by dividing the value obtained for mono-hydrolyzed TMC by the value obtained for Isopar L.

In the presence of tributylphosphate (TBP), the Isopar L value must be corrected since a few protons of TBP cannot be resolved from the Isopar L peaks. This is done by integrating the -OCH₂-protons of TBP which are well resolved at ∼4.05 ppm, dividing this value by 6 (for 6 protons). This area value is then multiplied by 21 (represents the three -CH₂CH₂CH₃ that are unresolved from the Isopar L peak) and subtracted from the peak area of Isopar L.

**Table 2:**

| Example No. | Carboxylic acid | Solvent | Solubility (wt%) |
|---|---|---|---|
| 2-1 | mhTMC | Isopar L | 0.02 |
| 2-2 | mhTMC | Isopar L + 1 wt% TEP | 0.2 |
| 2-3 | mhTMC | Isopar L + 1 wt% TEHP | 0.11 |
| 2-4 | mhTMC | 80/20 Isopar L/Toluene + 0.25 wt% TBP | 0.29 |
| 2-5 | mhTMC | 80/20 Isopar L / Toluene | 0.05 |
| 2-5 | mhIPC | Isopar L | <0.02 |
| 2-6 | mhIPC | Isopar L + 0.47 wt% TBP | 0.29 |

## Claims

1. A method for increasing the solubility of a hydrocarbon compound comprising an aliphatic or arene moiety substituted with at least one acyl halide and at least one carboxylic acid functional group within a hydrocarbon solvent, wherein the method comprises the step of preparing a solution comprising:
i) at least 80 v/v% of the hydrocarbon solvent,
ii) the hydrocarbon compound, and
iii) from 0.01 to 10 weight percent of a tri-hydrocarbyl phosphate compound represented by: 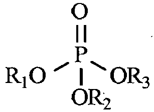 wherein R₁, R₂ and R₃ are independently selected from hydrogen and hydrocarbyl groups comprising from 1 to 10 carbon atoms, with the proviso that no more than one of R₁, R₂ and R₃ are hydrogen;
wherein the concentration of the hydrocarbon compound is greater than its solubility limit within the solvent but less than its solubility limit in the solution.

2. The method of claim 1 wherein the hydrocarbon compound and tri-hydrocarbyl phosphate compound are provided in a molar ratio of from 1:1000 to 2:1.

3. The method of claim 1 wherein the molar ratio of the hydrocarbon compound and tri-hydrocarbyl phosphate compound is from 1:100 to 1:1.

4. The method of claim 1 wherein the solution comprises at least 0.02 weight percent of the hydrocarbon compound.

5. The method of claim 1 wherein the solution comprises at least 0.05 weight percent of the hydrocarbon compound.

6. The method of claim 1 wherein the hydrocarbon compound comprises equal to or less than 30 carbon atoms.

7. The method of claim 1 wherein the hydrocarbon compound comprises from 4 to 12 carbon atoms

8. The method of claim 1 wherein the hydrocarbon compound comprises a single carboxylic acid functional group.

9. The method of claim 1 wherein the hydrocarbon solvent has a water solubility of less than 150 ppm.

10. The method of claim 1 wherein R₁, R₂ and R₃ are independently selected from: aliphatic and arene groups.

11. The method of claim 1 wherein the solution further comprises a polyfunctional acyl halide compound comprising no carboxylic acid functional groups.

## Patentansprüche

1. Ein Verfahren zum Erhöhen der Löslichkeit einer Kohlenwasserstoffverbindung, beinhaltend einen aliphatischen oder Aren-Anteil, substituiert mit mindestens einem Acylhalogenid und mindestens einer funktionellen Carbonsäuregruppe in einem Kohlenwasserstofflösungsmittel, wobei das Verfahren den Schritt des Zubereitens einer Lösung beinhaltet, die Folgendes beinhaltet:
i) mindestens 80 Vol.-% des Kohlenwasserstofflösungsmittels,
ii) die Kohlenwasserstoffverbindung, und
iii) 0,01 bis 10 Gewichtsprozent einer Trihydrocarbylphosphatverbindung, dargestellt durch: 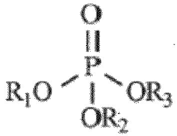 wobei R₁, R₂ und R₃ unabhängig aus Wasserstoff und Hydrocarbylgruppen, beinhaltend 1 bis 10 Kohlenstoffatome, ausgewählt sind, mit der Maßgabe, dass nicht mehr als eines von R₁, R₂ und R₃ Wasserstoff ist;
wobei die Konzentration der Kohlenwasserstoffverbindung größer als ihre Löslichkeitsgrenze innerhalb des Lösungsmittels, aber weniger als ihre Löslichkeitsgrenze in der Lösung ist.

2. Verfahren gemäß Anspruch 1, wobei die Kohlenwasserstoffverbindung und Trihydrocarbylphosphatverbindung in einem Molverhältnis von 1 : 1 000 bis 2 : 1 bereitgestellt sind.

3. Verfahren gemäß Anspruch 1, wobei das Molverhältnis der Kohlenwasserstoffverbindung und Trihydrocarbylphosphatverbindung 1 : 100 bis 1 : 1 beträgt.

4. Verfahren gemäß Anspruch 1, wobei die Lösung mindestens 0,02 Gewichtsprozent der Kohlenwasserstoffverbindung ausmacht.

5. Verfahren gemäß Anspruch 1, wobei die Lösung mindestens 0,05 Gewichtsprozent der Kohlenwasserstoffverbindung ausmacht.

6. Verfahren gemäß Anspruch 1, wobei die Kohlenwasserstoffverbindung gleich oder weniger als 30 Kohlenstoffatome beinhaltet.

7. Verfahren gemäß Anspruch 1, wobei die Kohlenwasserstoffverbindung 4 bis 12 Kohlenstoffatome beinhaltet.

8. Verfahren gemäß Anspruch 1, wobei die Kohlenwasserstoffverbindung eine einzelne funktionelle Carbonsäuregruppe beinhaltet.

9. Verfahren gemäß Anspruch 1, wobei das Kohlenwasserstofflösungsmittel eine Wasserlöslichkeit von weniger als 150 ppm aufweist.

10. Verfahren gemäß Anspruch 1, wobei R₁, R₂ und R₃ unabhängig aus Folgendem ausgewählt sind: aliphatischen und Aren-Gruppen.

11. Verfahren gemäß Anspruch 1, wobei die Lösung ferner eine polyfunktionelle Acylhalogenidverbindung, beinhaltend keine funktionellen Carbonsäuregruppen, beinhaltet.

## Revendications

1. Une méthode pour augmenter la solubilité d'un composé hydrocarboné comprenant un groupement aliphatique ou arène substitué par au moins un halogénure d'acyle et au moins un groupe fonctionnel acide carboxylique au sein d'un solvant hydrocarboné, la méthode comprenant l'étape consistant à préparer une solution comprenant :
i) au moins 80 pour cent en volume du solvant hydrocarboné,
ii) le composé hydrocarboné, et
iii) de 0,01 à 10 pour cent en poids d'un composé phosphate de tri-hydrocarbyle représenté par : 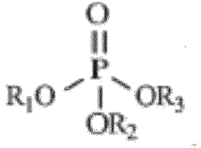 dans laquelle R₁, R₂ et R₃ sont indépendamment sélectionnés parmi un hydrogène et des groupes hydrocarbyle comprenant de 1 à 10 atomes de carbone, à la condition que pas plus d'un R parmi R₁, R₂ and R₃ ne soit un hydrogène,
dans laquelle la concentration du composé hydrocarboné est supérieure à sa limite de solubilité au sein du solvant mais inférieure à sa limite de solubilité dans la solution.

2. La méthode de la revendication 1 dans laquelle le composé hydrocarboné et le composé phosphate de tri-hydrocarbyle sont fournis en un rapport molaire allant de 1/1 000 à 2/1.

3. La méthode de la revendication 1 dans laquelle le rapport molaire du composé hydrocarboné et du composé phosphate de tri-hydrocarbyle va de 1/100 à 1/1.

4. La méthode de la revendication 1 dans laquelle la solution comprend au moins 0,02 pour cent en poids de composé hydrocarboné.

5. La méthode de la revendication 1 dans laquelle la solution comprend au moins 0,05 pour cent en poids de composé hydrocarboné.

6. La méthode de la revendication 1 dans laquelle le composé hydrocarboné comprend 30 atomes de carbone ou moins.

7. La méthode de la revendication 1 dans laquelle le composé hydrocarboné comprend de 4 à 12 atomes de carbone.

8. La méthode de la revendication 1 dans laquelle le composé hydrocarboné comprend un unique groupe fonctionnel acide carboxylique.

9. La méthode de la revendication 1 dans laquelle le solvant hydrocarboné a une hydrosolubilité inférieure à 150 ppm.

10. La méthode de la revendication 1 dans laquelle R₁, R₂ et R₃ sont indépendamment sélectionnés parmi : des groupes aliphatique et arène.

11. La méthode de la revendication 1 dans laquelle la solution comprend en sus un composé halogénure d'acyle polyfonctionnel ne comprenant pas de groupe fonctionnel acide carboxylique.
